# EUROPEAN PATENT SPECIFICATION

(11) **EP 1 581 030 B1**
(45) Date of publication and mention of the grant of the patent: **13.05.2009**
(21) Application number: 05251684.6
(22) Date of filing: 18.03.2005
(51) Int. Cl.: H05B 41/282

(54) **Parallel lighting system for surface light source discharge lamps**
Beleuchtungseinrichtung für flächenartige Lichtquelle mit parallelen Entladungslampen
Système d'éclairage pour source lumineuse plane avec des lampes à décharge parallèles

(30) Priority: 19.03.2004 JP 2004079571; 10.11.2004 JP 2004326485
(43) Date of publication of application: 28.09.2005
(73) Proprietor: Ushijima, Masakazu, Nakano-ku, Tokyo (JP)
(72) Inventor: Ushijima, Masakazu, Tokyo (JP); Taido, Daisuke, Tokyo (JP)
(74) Representative: Simons, Alison

(56) References cited:
- US-A- 5 495 405
- US-A1- 2004 155 596
- US-B1- 6 417 833

## Description

### TECHNICAL FIELD

The present invention relates to an application of the invention disclosed in U.S. Patent No. 5,495,405 (corresponding to Japanese Patent No. 2733817) by the inventors of the present invention or the use of the technical subject matters of that invention, and pertains a parallel lighting system for elongated discharge lamps for a surface light source which require a high voltage, such as a cold-cathode fluorescent lamp (CCFL), an external electrode fluorescent lamp (EEFL) and a neon lamp, for use in a large surface light source system for liquid crystal display televisions, general-purpose illumination and the like.

### BACKGROUND OF THE INVENTION

Recently, backlights for liquid crystal display are becoming larger and cold-cathode fluorescent lamps to be used for backlights are becoming longer.

Accordingly, the discharge voltage is becoming higher. So is the discharge impedance.

The EEFL requires a higher discharge voltage.

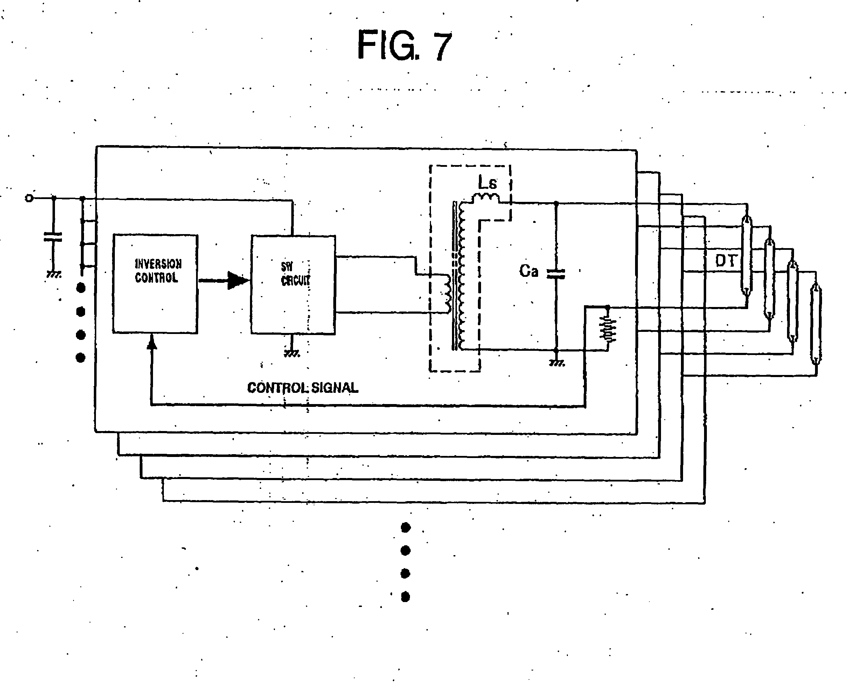

Because a large surface light source for a liquid crystal display television or the like requires that the brightness of the surface light source should be uniform, the surface light source is provided for each cold-cathode fluorescent lamp with a mechanism which detects the currents that flows in the cold-cathode fluorescent lamp and feeds the detection result to a control circuit to keep the lamp current constant, as shown in Fig. 7.

Many of the conventional discharge lamp lighting systems generally light discharge lamps by setting the electrode on one side of a cold-cathode fluorescent lamp to a high voltage and driving the electrode at the other end with the GND (ground) level. Such a lighting scheme is called "single-side high voltage driving", and the drive method is advantageous in that the lamp current control is easy so that a lighting circuit is easy to configure.

As cold-cathode fluorescent lamps become longer, the discharge voltage of the cold-cathode fluorescent lamps gets higher and the impedance of discharge lamps gets higher, so that the difference in brightness between the high-voltage side and low-voltage side of the cold-cathode fluorescent lamp stands out. Such a phenomenon is called "nonuniform brightness".

While the nonuniform brightness phenomenon does not distinctly occur on a cold-cathode fluorescent lamp alone, it apparently occurs when the cold-cathode fluorescent lamp is placed closer to a proximity conductor, such as a reflector. (See Japanese Laid-Open Patent Publication (Kokai) No. H11-8087 and Japanese Laid-Open Patent Publication (Kokai) No. H11-27955.)

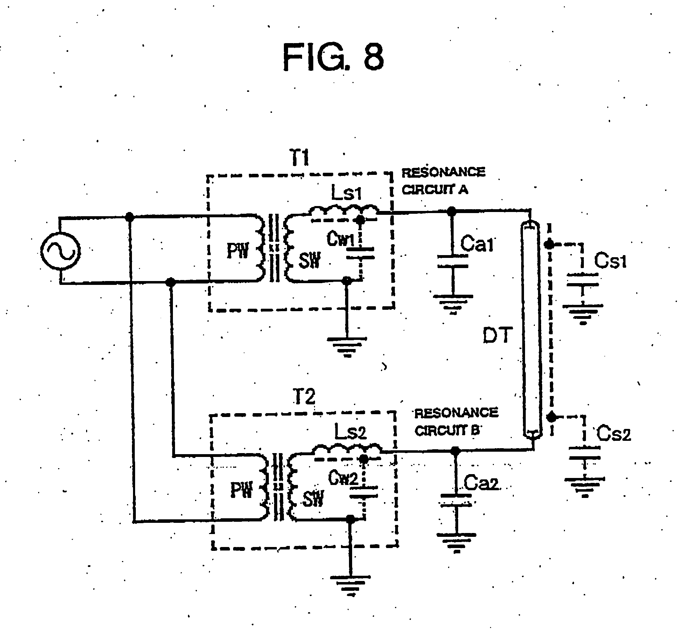

As single-side high voltage driving results in large nonuniform brightness, a so-called double-side high voltage driving system or a floating system is proposed to reduce nonuniform brightness by driving both ends of a cold-cathode fluorescent lamp with high voltages of opposite phases, as shown in Fig. 8. Because the voltage to be applied to each electrode of a cold-cathode fluorescent lamp becomes a half, this system is advantageous in driving an elongated cold-cathode fluorescent lamp or external electrode fluorescent lamp which require a high voltage.

As the voltage to be applied to each electrode becomes a half, a leak current which is the flow of the current due to a parasitic capacitance produced around a discharge lamp becomes smaller, making.the brightness of the cold-cathode fluorescent lamp more uniform.

In addition, the voltage to be applied to the windings of a step-up transformer becomes lower, increasing the safety of the step-up transformer.

It is said that double-side high voltage driving is suitable for driving elongated cold-cathode fluorescent lamps in a large surface light source.

As a cold-cathode fluorescent lamp is driven with a high voltage, however, there is large static noise generated from the cold-cathode fluorescent lamp.

As the static noise affects the liquid crystal display, every other cold-cathode fluorescent lamps are alternately driven with outputs different in phase by 180 degrees to cancel out static noise generated from the cold-cathode fluorescent lamp, as disclosed in Japanese Laid-Open Patent Publication (Kokai) No. 2000-352718.

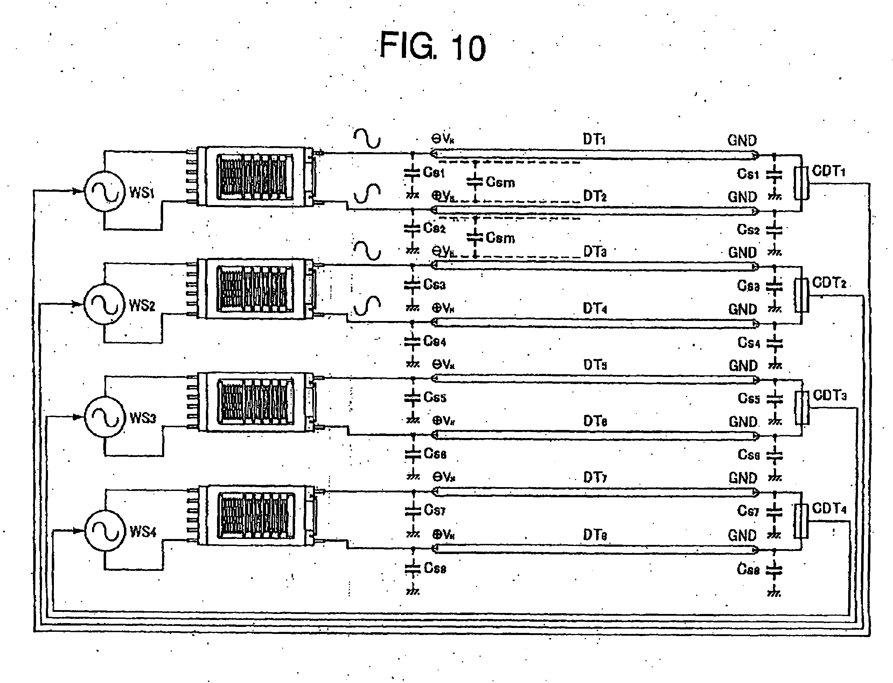

Fig. 10 shows one example of the structure in which the secondary winding of a transformer takes a floating structure to provide outputs of opposite phases, which are connected to one ends of cold-cathode fluorescent lamps whose other ends are connected together so that the cold-cathode fluorescent lamps are driven in the form of parallel connection.

The lamp currents of individual fluorescent lamps are detected by current detection means CDT₁ to CDT₄ respectively, are feedback to voltage sources WS₁ to WS₄ to make the lamp currents uniform and stable.

As adjoining cold-cathode fluorescent lamps are driven with voltages different in phase by 180 degrees, therefore, static noise generated from the cold-cathode fluorescent lamp is canceled, thus reducing the influence on the liquid crystal display.

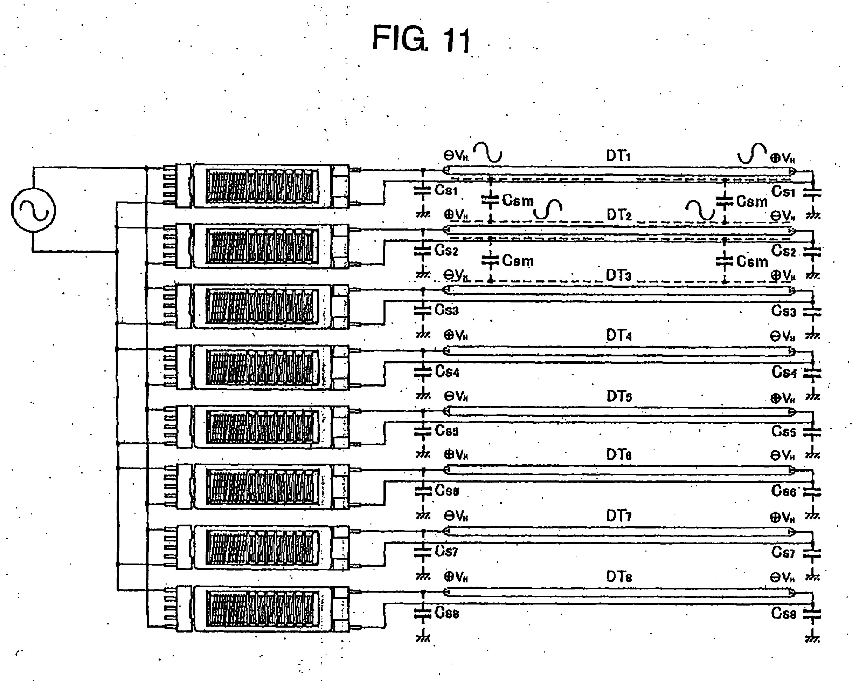

Fig. 11 shows one example in which the above method is further modified. A transformer with a floating structure is provided for each cold-cathode fluorescent lamp, and every other cold-cathode fluorescent lamps are alternately driven with outputs different in phase by 180 degrees to cancel out static noise.

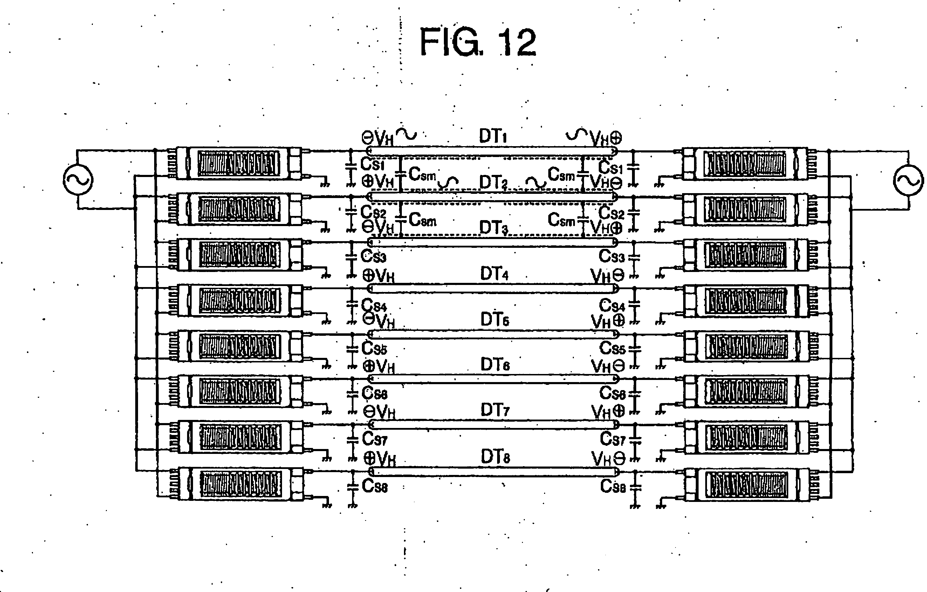

Further, as the wires of a high voltage are long according to the method illustrated in Fig. 11, the structure that is shown in Fig. 12 is taken where a leakage flux transformer is arranged on either side to make the high-voltage wires shorter.

While each of Figs. 16 and 17 exemplarily shows an AC power source, in an inverter circuit for an actual large surface light source is provided with a lamp current control circuit as shown in Fig. 7 for each transformer. This makes the scale of the circuit huge.

A problem that the circuit scale of an inverter circuit in a large surface light source system becomes huge can be overcome by means of driving multiple cold-cathode fluorescent lamps used in a surface light source in parallel to thereby make the lamp currents of the individual discharge lamps uniform. The solution is proposed by the inventors of the present invention in U.S. Laid-Open Patent Publication No. 2004-0155596-A1 (corresponding to Japanese Laid-Open Patent Publication (Kokai) No. 2004-00374) and illustrated in Fig. 13.

According to the single-side high voltage driving system, one electrode side of a cold-cathode fluorescent lamp becomes a high voltage while the other electrode side is the GND (ground) level. When multiple cold-cathode fluorescent lamps are driven in parallel by the method illustrated in Fig. 13 and proposed in U.S. Laid-Open Patent Publication No. 2004-0155596-A1, electrodes on one side of adjoining ones of multiple cold-cathode fluorescent lamps are in phase.

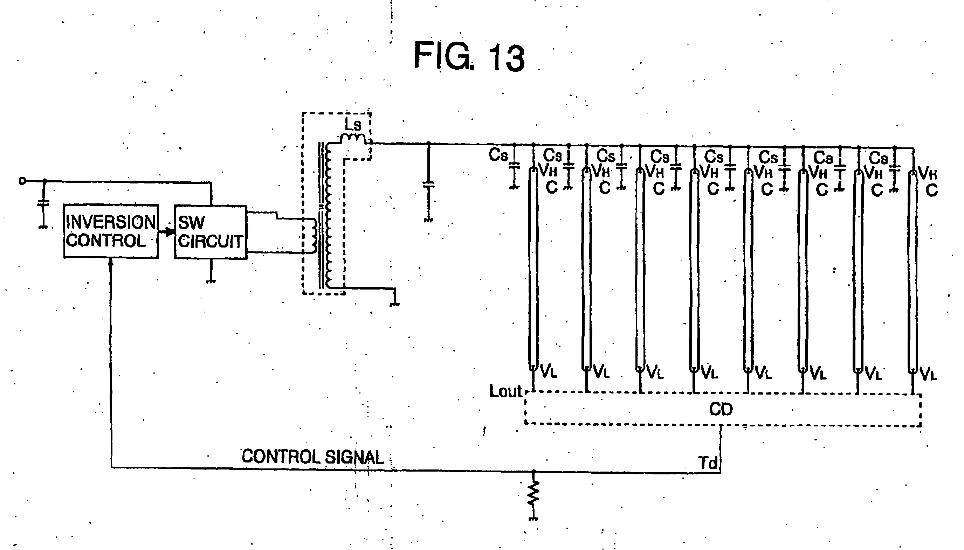

Such a single-side high voltage driving system has a problem of large nonuniform brightness except for Fig.13. In addition, static noise generated from the cold-cathode fluorescent lamp is large, which may influence the liquid crystal display.

To cut off static noise generated from a surface light source, therefore, it is necessary to insert a conductive film coated with ITO (Indium Trioxide) or so between the surface light source and the liquid crystal display panel.

Such nonuniform brightness occurs when a cold-cathode fluorescent lamp is placed close to a reflector and is such that the high-voltage side is bright while the low-voltage side is dark. It is said that such nonuniform brightness is not avoidable in a large surface light source.

The nonuniform brightness increases when the impedance of a cold-cathode fluorescent lamp is high or when the parasitic capacitance around the cold-cathode fluorescent lamp is large because the current flows to a nearby conductor via the parasitic capacitor. Even when the drive frequency of a cold-cathode fluorescent lamp becomes higher, therefore, nonuniform brightness becomes greater.

It is often the case where the lamp current is made smaller to extend the service life of a cold-cathode fluorescent lamp for a backlight for a liquid crystal display television. Reducing the lamp current also means an increase in the impedance of the cold-cathode fluorescent lamp.

As an elongated cold-cathode fluorescent lamp is used in a large liquid crystal display television and originally has a high impedance, the impedance of the cold-cathode fluorescent lamp becomes higher for the two reasons mentioned above, so that particularly, nonuniform brightness is likely to occur.

If a cold-cathode fluorescent lamp is long, the outside diameter should be made larger to provide a strength. While a cold-cathode fluorescent lamp for a backlight (surface light source) for a notebook type personal computer is normally 1.8 mm to 2.7 mm in diameter, a cold-cathode fluorescent lamp in use for a backlight (surface light source) for a liquid crystal display television is about 3 mm to 5 mm in diameter. The increased outside diameter of a cold-cathode fluorescent lamp means that the parasitic capacitance produced between the cold-cathode fluorescent lamp and the reflector becomes greater.

In a large surface light source, therefore, not only the impedance of the cold-cathode fluorescent lamp is high but also the parasitic capacitance is high, resulting in overlapped conditions of making nonuniform brightness likely to occur. In view of this, it is said to be difficult to drive a large liquid crystal display backlight having an elongated cold-cathode fluorescent lamp on a high frequency.

Because the nonuniform brightness phenomenon is such that a high-potential portion near the electrode of a cold-cathode fluorescent lamp becomes bright while a low-potential portion becomes dark, nonuniform brightness occurs less in the double-side high voltage driving system than in the single-side high voltage driving system. (See Japanese Laid-Open Patent Publication (Kokai) No. H11-8087 and Japanese Laid-Open Patent Publication (Kokai) No. H11-27955.)

The technique of achieving high efficiency of an inverter circuit using the resonance technique is disclosed in U.S. Patent No. 5,495,405 by one of the inventors of the present invention. That is, biasing of outputs is hard to occur in a conventional inverter circuit which uses a non-leakage flux transformer having a low leakage inductance as the step-up transformer at the output stage and uses a ballast capacitor to stabilize the lamp current. The biasing of outputs is a particular phenomenon which occurs when a scheme of acquiring a high efficiency is performed by working out the invention in U.S. Patent No. 5,495,405.

When an inverter circuit has two outputs whose output voltages differ in phase from each other by 180 degrees, a resonance circuit is constructed for each of the outputs in opposite phase as shown in Figure 8. When the two resonance-circuits are constructed not in association with each other, the resonance frequencies of the resonance circuits should not necessarily match with each other.

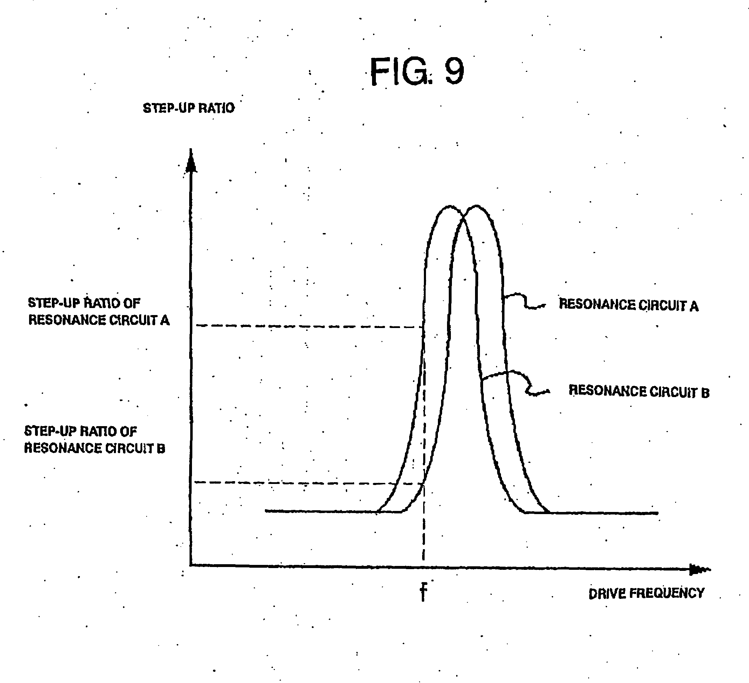

If the resonance frequencies of the resonance circuits do not match with each other, as shown in Fig. 9, the step-up ratios of the outputs of the inverter circuit differ even when the resonance circuits are driven with the same frequency, thus making the voltages to be applied to the electrodes of the cold-cathode fluorescent lamp different from each other.. As a result, the outputs of the inverter circuit are unbalanced.

The unbalance is originated from the difference in the resonance frequencies of the outputs of opposite phases caused by the difference in leakage inductances of the leakage flux transformers to be used at the outputs of the inverter circuit or the difference in capacitive components of the secondary circuit.

In an actual surface light source system, a current distributor module is connected to each electrode of the cold-cathode fluorescent lamp or the size precisions of the cold-cathode fluorescent lamp and the reflector which includes the effect as a proximity conductor vary, thus causing considerable unbalance of parasitic capacitances.

There are fluctuations in leakage inductances of the leakage flux transformers, which are the cause of making the resonance frequencies of the resonance circuits unmatched with each other.

When the resonance frequencies do not match with each other, the outputs become unbalance so that each of the electrodes of the cold-cathode fluorescent lamp cannot be driven uniformly. As a result, excessive power concentration occurs on one output, leading to nonuniform heat generation of the inverter circuit.

To prevent the biasing of outputs, the resonance frequencies of the resonance circuits for the outputs of opposite phases should be made uniform.

The following will discuss the problem of the prior art from viewpoint of static noise.

To reduce static noise, it is effective to cancel static noise by driving adjoining cold-cathode fluorescent lamps with outputs of opposite phases. Figs. 15 to 17 show examples of the structure. To drive cold-cathode fluorescent lamps in the mentioned manner, a single transformer having outputs of opposite phases is provided for every set of two cold-cathode fluorescent lamps which are driven in opposite phases.

In the example shown in Fig. 10, however, the electrodes on one side of adjoining cold-cathode fluorescent lamp become high potentials of opposite phases while the other electrodes are at the GND (ground) potential. In this case, the presence of the leak current flowing via a parasitic capacitor Csm produced between the adjoining cold-cathode fluorescent lamps on the high-voltage side makes nonuniform brightness worse than the single-side high voltage driving system in the case shown in Fig. 13. This undesirably requires that the backlight with such a structure should be driven with a relatively low frequency.

One solution to this problem is to realize double-side high voltage driving by driving a single cold-cathode fluorescent lamp with a single transformer as shown in Fig. 11.

Because multiple high-voltage lines run across in the casing of the surface light source according to the method, however, the parasitic capacitance becomes unbalanced.

In addition, the individual cold-cathode fluorescent lamps are alternately driven in opposite phases, thus requiring more transformers than the structure shown in Fig. 10.

The structure shown in Fig. 12 has a greater number of transformers to prevent high-voltage crossover lines so that the transformers are arranged on both sides of the cold-cathode fluorescent lamps to achieve double-side high voltage driving, and changes the phase of the drive voltage for every other cold-cathode fluorescent lamp to reduce static noise. The structure apparently needs a significant number of transformers and control circuits.

Although a switching circuit and a control circuit are not shown in Figs. 16 and 17, the actual inverter circuit system for a liquid crystal display television has additional circuits of detecting the lamp currents of the individual cold-cathode fluorescent lamps and controlling the respective cold-cathode fluorescent lamps, the inverter circuit has a very large scale.

None of the circuits shown in Figs. 10 to 12 do not solve the problem of the outputs being unbalanced due to the deviation of the resonance frequency of the secondary circuit.

In view of the above, there has been demands for a low-cost surface light source system and an inverter circuit for multiple lamps, which reduces nonuniform brightness and static noise, and fulfills the requirement that lamp currents of individual cold-cathode fluorescent lamps should be uniform and stabilized.

### SUMMARY OF THE INVENTION

According to the invention there is provided a parallel lighting system for discharge lamps for a surface light source, the parallel lighting system having a surface light source system and first and second step-up transformers: the surface light source system comprising an even number of discharge lamps each discharge lamp having a first terminal and a second terminal; **characterized in that:** the parallel lighting system further comprises: a first shunt transformer and a second shunt transformer CDT2 each shunt transformer having a first coil and a second coil; the discharge lamps are driven by the first and second step-up transformers each including two resonance circuits, and in which the first transformer generates a first voltage waveform and the second transformer generates a second voltage waveform, the first voltage waveform being different in phase by 180 degrees from the second voltage waveform; the discharge lamps are arranged in a plurality of pairs such that the first terminal of a first discharge lamp of a first pair is driven with the first voltage waveform and the first terminal of a second discharge lamp of said first pair is driven with the second voltage waveform and the first terminal of a first discharge lamp.of a second pair is driven with the first voltage waveform and the first terminal of a second discharge lamp of said second pair is driven with the second voltage waveform; the second terminal of the discharge lamps of a pair are connected together via the first coil, being composed of oblique winding or section winding, of the first shunt transformer; the second terminal of the discharge lamps of a pair are connected together via the first coil , being composed of oblique winding or section winding, of the second shunt transformer; and the second coil of the first shunt transformer is connected in series to the second coil of the second shunt transformer, thereby balancing and detecting a lamp current of each of the discharge lamps.

According to a second aspect of the invention there is also provided a parallel lighting system for discharge lamps for a surface light source, the parallel lighting system having a surface light source system and first and second step-up transformers: the surface light source system comprising an even number of discharge lamps each discharge lamp having a first terminal and a second terminal; **characterized in that:** the parallel lighting system further comprises: a first shunt transformer CDT1 having a first coil and a second coil; the discharge lamps are driven by the first and second step-up transformers each including two resonance circuits, and in which the first transformer generates a first voltage waveform and the second transformer generates a second voltage waveform, the first voltage waveform being different in phase by 180 degrees from the second voltage waveform; the discharge lamps are arranged in a plurality of pairs such that the first terminal of a first discharge lamp of a first pair is driven with the first voltage waveform and the first terminal of a second discharge lamp of said first pair is driven with the second voltage waveform and the first terminal of a first discharge lamp of a second pair is driven with the first voltage waveform and the first terminal of a second discharge lamp of said second pair is driven with the second voltage waveform; the second terminals of each discharge lamp of the first pair are connected together via the first coil, being composed of oblique winding or section winding, of said shunt transformer; and the second terminals of each discharge lamp of the second pair are connected together via the second coil, being composed of oblique winding or section winding, of said shunt transformer.

The discharge lamp parallel lighting system may comprise 2N discharge lamps and in this case the shunt transformer comprises N coils where N is an integer equal to three or more.

### BRIEF DESCRIPTION OF THE DRAWINGS

Fig. 1 is a circuit structural diagram showing a yet still further embodiment of the present invention;
Fig. 2 is a circuit structural diagram showing a yet still further embodiment of the present invention;
Fig. 3 is an explanatory diagram showing one example of a 3-way shunt transformer according to the present invention;
Fig. 4 is a circuit structural diagram showing a yet still further embodiment of the present invention which uses a 3-way shunt transformer of the present invention;
Fig. 5 is a diagram of actual measurements indicating the results of measuring static noise when adjoining cold-cathode fluorescent lamps are driven in phase;

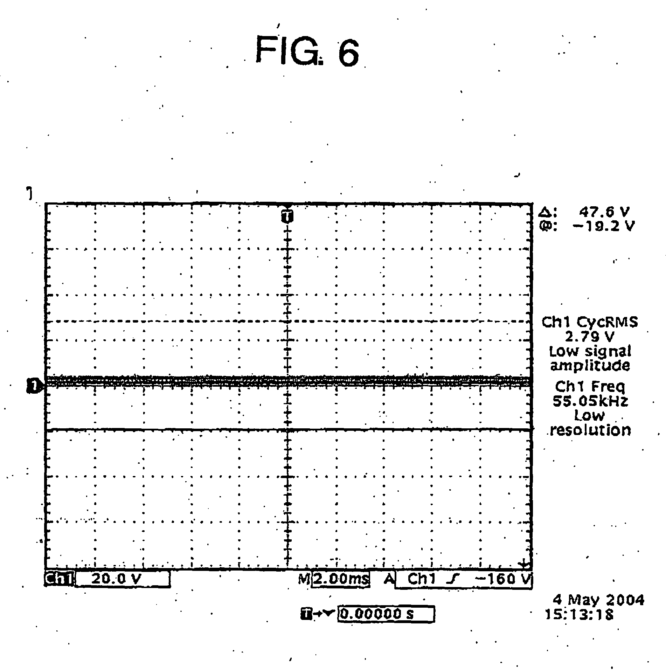

Fig. 6 is a diagram of actual measurements indicating the results of measuring static noise when adjoining cold-cathode fluorescent lamps are driven in opposite phases;
Fig. 7 is a circuit structural diagram showing one example of making the brightness of a conventional large surface light source uniform;
Fig. 8 is an exemplary diagram illustrating the work of two resonance circuits in a system of driving both ends of a conventional cold-cathode fluorescent lamp with high voltages of opposite phases;
Fig. 9 is a drive frequency v.s. step-up ratio graph for explaining states where the step-up ratio of the outputs differs according to the unmatched resonance frequency in the circuit structure shown in Fig. 10-12;
Fig. 10 is a circuit structural diagram showing one example of canceling static noise generated from a cold-cathode fluorescent lamp in the conventional single-side high voltage driving system;
Fig. 11 is a circuit structural diagram showing another example of canceling static noise generated from a cold-cathode fluorescent lamp in the conventional double-side high voltage system;
Fig. 12 is a circuit structural diagram showing a different example of canceling static noise generated from a cold-cathode fluorescent lamp in the conventional double-side high voltage system; and
Fig. 13 is a circuit structural diagram showing one example where means of driving multiple cold-cathode fluorescent lamps to be used in a surface light source in parallel to make the lamp currents of the individual discharge lamps uniform is employed in a conventional large surface light source system.

### DETAILED DESCRIPTION OF THE PREFERRED EMBODIMENTS

The present invention will be described below with reference to the accompanying drawings.

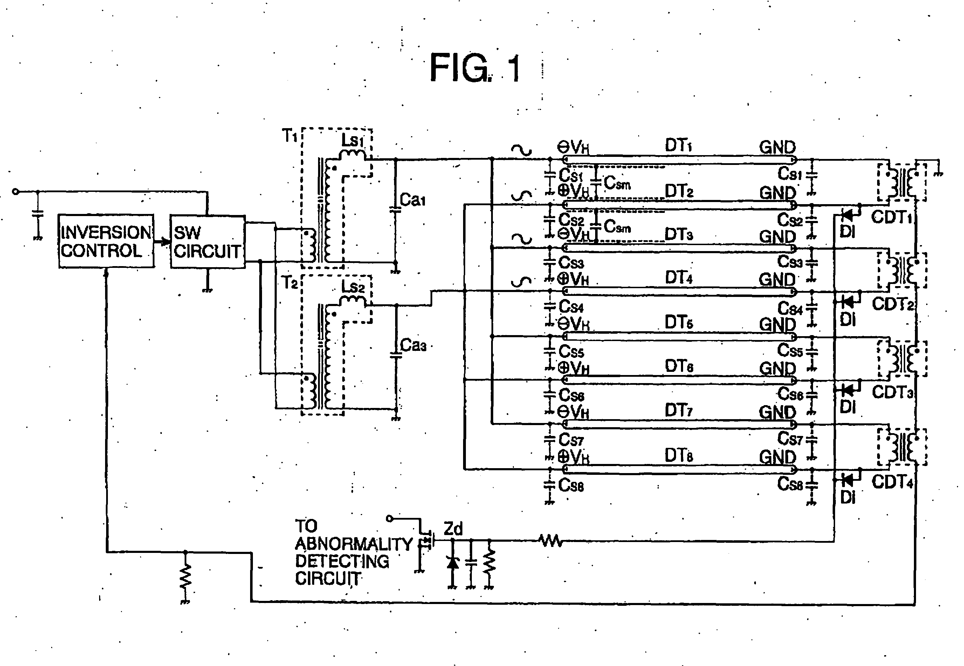

Fig. 1 is an explanatory diagram illustrating the structure of one of feasible embodiments of the modification where two resonance circuits are balanced by balancing and shunting a pair of cold-cathode fluorescent lamps for each shunt transformer, and where the static noise is canceled.

It is to be noted however that the shunt transformers COT₁ to CDT₄ to be used in this case require very large mutual inductances (specifically, twice as high or higher), so that to secure large mutual inductance values, keep a high self resonance frequency and design the circuit compact, a specific winding method, such as oblique winding disclosed in U.S. Laid-Open Patent Publication No. 2004-0155596-A1 by one of the present inventors, or the section winding disclosed in Japanese Laid-Open Patent Publication (Kokai) No. 2004-254129, is essential. It has been confirmed that the requirements could not be fulfilled by a shunt transformer constructed by the stacked winding disclosed as a conventional method at least in Japanese Laid-Open Patent Publication (Kokai) No. 2004-254129.

The above connection method requires just a single feedback circuit for the lamp current. Because the current distributor modules CDT₁ to CDT₄ can be accommodated in the backlight panel as a single independent module, runing of high-voltage lines can be made very simple.

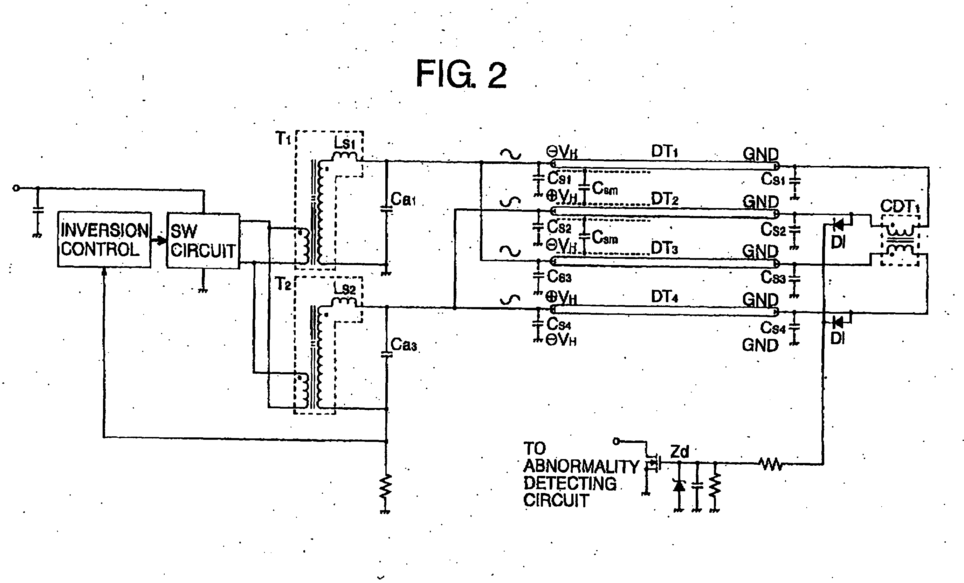

Fig. 2 is an explanatory diagram illustrating the structure of a further embodiment where four lamps are balanced and shunted by a single shunt transformer to balance two resonance circuits, and the static noise is canceled. Four lamps are balanced by the single shunt transformer CDT₁. Although the detection of the lamp current in this case is done on the GND side of the secondary winding of the step-up transformer, the detection may be carried out by a separate current transformer further provided, or by a light-emitting diode and a phototransistor.

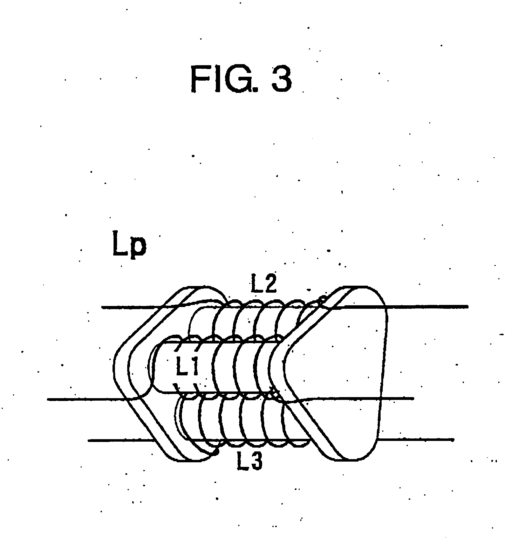

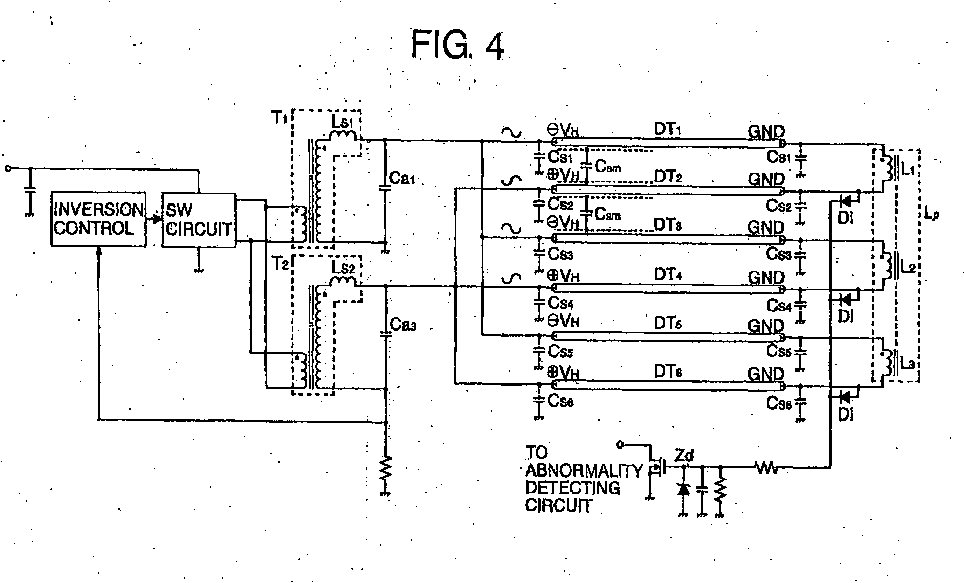

Fig. 4 shows a still further embodiment where the shunt transformer CDT₁ is replaced with a 3-way shunt transformer Lp in Fig. 1 disclosed in U.S. Laid-Open Patent Publication No. 2004-0155596-A1 (Fig. 3 in the present specification).

Fig. 4 is an explanatory diagram illustrating the structure that balances and shunts six lamps using a 3-way shunt transformer to balance two resonance circuits, and the static noise is canceled. If the 3-way shunt transformer is replaced with a shunt transformer for multiple lamps, a greater number of lamps can be balanced and shunted.

### (Operation)

The operation of a surface light source system for lighting multiple lamps according to the present invention will be described below.

In an inverter circuit having two outputs of opposite phases, the resonance circuit that is constituted by a leakage inductance and the capacitive component of the secondary circuit is exemplarily illustrated in Fig. 8.

Referring to Fig. 8, T1 and T2 are leakage flux transformers, and Ls₁ and Ls₂ are leakage inductances of the leakage flux transformers. The "leakage inductance" here is a so-called JIS leakage inductance which is measured from the secondary winding side when the primary side of the transformer is short-circuited.

The value of the leakage inductance of the leakage flux transformer is such that when the reactance at the operational frequency of the inverter circuit is around 60% of the impedance of the discharge lamp DT as a load, the power factor improving effect is demonstrated, thereby improving the conversion efficiency of the inverter circuit. This effect is disclosed in U.S. Patent No. 5,495,405 by one of the present inventors.

On the transformer T1 side in Fig. 8, Ls₁ is the inductive component and the sum of a winding parasitic capacitance Cw₁, an auxiliary capacitance Ca₁ and a parasitic capacitance Cs₁ around the discharge lamp constitutes the secondary capacitive component, and those inductive component and capacitive component constitute one series resonance circuit. Such a resonance circuit is also present on the transformer T2 side, in which an inductive component Ls₂ and capacitive components Cw₂, Ca₂ and Cs₂ constitute the other series resonance circuit. In this case, the two resonance circuits are independent of each other and the resonance frequencies of the resonance circuits should not necessarily match with each other.

When one of the coils of the shunt transformer is connected between the low-voltage terminals of a pair of cold-cathode fluorescent lamps as shown in Figs. 1 and 2, the lamp currents that flow in the pair of cold-cathode fluorescent lamps become approximately identical. This couples the resonance circuits of the inverter circuit having two outputs different in phase from each other by 180 degrees, so that the resonance frequencies become identical.

As apparent from the above, the significant feature of the present invention lies in that the output unbalance which occurs in the combination of the multiple high voltage driving system and a high efficient inverter circuit including many resonance circuits on the secondary side of a transformer (U.S. Patent No. 5,495,405) is corrected by coupling the outputs via a current transformer with a high breakdown voltage to match the resonance frequencies of the resonance circuits with each other.

The present invention has a further significant feature which lies in that an effect similar to the effect of the scheme of canceling static noise to be generated by alternately enabling the voltage of every other electrode of the cold-cathode fluorescent lamp to be driven in the different phases high voltage driving system can be realized with a simple structure by combining a current transformer with a high breakdown voltage and a current distributor module.

Therefore, the invention provides a simple, large-power, high efficient and low-noise surface light source system at a low cost as a backlight for a liquid crystal display television which needs a large surface light source having multiple cold-cathode fluorescent lamps.

As the cost problem that has been the biggest bottleneck in popular usage of cold-cathode fluorescent lamps for the general illumination purpose is eliminated, the use of a large surface light source and a cold-cathode fluorescent lamp for general illumination becomes broader.

As a result, the condition for the output stages of opposite phases to drive a load becomes uniform, and the loads to be applied to the individual transistors and the individual step-up transformers become uniform.

The brightness of a discharge lamp which is driven by the high voltage driving method to using many transformers become uniform on each electrode side, thus ensuring uniform light emission. This results in an improvement of uniform light emission even for a long cold-cathode fluorescent lamp.

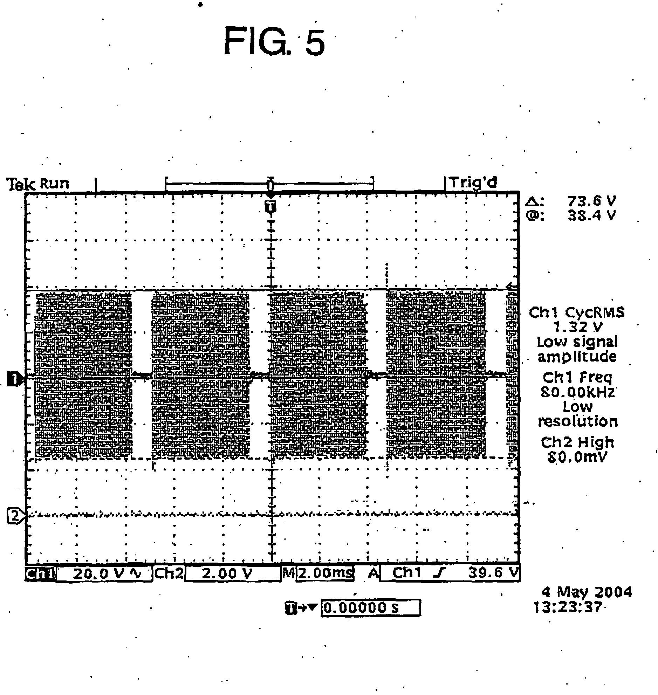

As clearly apparent from the comparison of the results, shown in Fig. 5, of measuring static noise when adjoining cold-cathode fluorescent lamps are driven in phase with the results, shown in Fig. 13, of measuring static noise when adjoining cold-cathode fluorescent lamps are driven in opposite phases, the electrostatic field is canceled out in the case of cold-cathode fluorescent lamps whose drive voltages have different polarities, thus making it possible to considerably reduce static noise generated from the backlight with a simple structure.

## Claims

1. A parallel lighting system for discharge lamps for a surface light source, the parallel lighting system having a surface light source system and first and second step-up transformers (T1, T2):
the surface light source system comprising an even number of discharge lamps (DT) each discharge lamp having a first terminal and a second terminal; **characterized in that:** the parallel lighting system further comprises:
a first shunt transformer CDT1 and a second shunt transformer CDT2 each shunt transformer having a first coil and a second coil;
the discharge lamps are driven by the first and second step-up transformers (T1, T2) each including two resonance circuits, and in which the first transformer (T1) generates a first voltage waveform (-VH) and the second transformer (T2) generates a second voltage waveform (+VH), the first voltage waveform being different in phase by 180 degrees from the second voltage waveform;
the discharge lamps are arranged in a plurality of pairs (DT1 and DT2, DT3 and DT4) such that the first terminal of a first discharge lamp (DT1) of a first pair (DT1 and DT2) is driven with the first voltage waveform (-VH) and the first terminal of a second discharge lamp (DT2) of said first pair is driven with the second voltage waveform (+VH) and the first terminal of a first discharge lamp (DT3) of a second pair (DT3 and DT4) is driven with the first voltage waveform (-VH) and the first terminal of a second discharge lamp (DT4) of said second pair is driven with the second voltage waveform (+VH);
the second terminals of the discharge lamps of said first pair (DT1 and DT2) are connected together via the first coil, being composed of oblique winding or section winding, of the first shunt transformer (CDT1);
the second terminals of the discharge lamps of said second pair (DT3 and DT4) are connected together via the first coil , being composed of oblique winding or section winding of the second shunt transformer (CDT2); and
the second coil of the first shunt transformer (CDT1) is connected in series to the second coil of the second shunt transformer (CDT2), thereby balancing and detecting a lamp current of each of the discharge lamps (DT).

2. A parallel lighting system for discharge lamps for a surface light source, the parallel lighting system having a surface light source system and first and second step-up transformers (T1, T2):
the surface light source system comprising an even number of discharge lamps (DT) each discharge lamp having a first terminal and a second terminal;
**characterized in that:**
the parallel lighting system further comprises: a first shunt transformer CDT1 having a first coil and a second coil;
the discharge lamps are driven by the first and second step-up transformers (T1, T2) each including two resonance circuits, and in which the first transformer (T1) generates a first voltage waveform' (-VH) and the second transformer (T2) generates a second voltage waveform (+VH), the first voltage waveform being different in phase by 180 degrees from the second voltage waveform;
the discharge lamps are arranged in a plurality of pairs (DT1 and DT2, DT3 and DT4) such that the first terminal of a first discharge lamp (DT1) of a first pair (DT1 and DT2) is driven with the first voltage waveform (-VH) and the first terminal of a second discharge lamp (DT2) of said first pair is driven with the second voltage waveform (+VH) and the first terminal of a first discharge lamp (DT3) of a second pair (DT3 and DT4) is driven with the first voltage waveform (-VH) and the first terminal of a second discharge lamp (DT4) of said second pair is driven with the second voltage waveform (+VH);
the second terminals of each discharge lamp of the first pair (DT1 and DT2) are connected together via the first coil, being composed of oblique winding or section winding, of said shunt transformer (CDT1);
and the second terminals of each discharge lamp of the second pair (DT3 and DT4) are connected together via the second coil, being composed of oblique winding or section winding, of said shunt transformer (CDT1).

3. A parallel lighting system according to claim 2, wherein said discharge lamp parallel lighting system comprises 2N discharge lamps and the shunt transformer (CDT1) comprises N coils where N is an integer equal to three or more.

## Patentansprüche

1. Eine parallele Beleuchtungsanlage für Entladungslampen für eine Oberflächenlichtquelle; wobei die parallele Beleuchtungsanlage eine Oberflächenlichtquellenanlage und erste und zweite Aufwärtstransformatoren (T1,T2) aufweist und
die Oberflächenlichtquellenanlage eine gerade Anzahl an Entladungslampen (DT) umfasst, wobei jede Entladungslampe einen ersten Anschluss und einen zweiten Anschluss aufweist,
**dadurch gekennzeichnet, dass** die parallele Beleuchtungslange des Weiteren umfasst:
einen ersten Shunt-Transformator (CDT1) und einen zweiten Shunt-Transformator (CDT2), wobei jeder der Shunt-Transformatoren eine erste Wicklung und eine zweite Wicklung aufweist; wobei
die Entladungslampen von dem ersten und dem zweiten Aufwärtstransformator (T1, T2) betrieben werden, die jeweils zwei Resonanzschaltkreise beinhalten, und wobei der erste Transformator (T1) eine erste Spannungswellenform (-VH) und der zweite Transformator (T2) eine zweite Spannungswellenform (+VH) erzeugt, und die erste Spannungswellenform eine andere zur zweiten Spannungswellenform um 180 Grad versetzte Phase aufweist; und
die Entladungslampen in einer Mehrzahl von Paaren (DT1 und DT2, DT3 und DT4) so angeordnet sind, dass der erste Anschluss einer ersten Entladungslampe (DT1) eines ersten Paares (DT1 und DT2) mit der ersten Spannungswellenform (-VH) betrieben wird und der erste Anschluss einer zweiten Entladungslampe (DT2) des besagten ersten Paares mit der zweiten Spannungswellenform (+VH) betrieben wird und der erste Anschluss einer ersten Entladungslampe (DT3) eines zweiten Paares (DT3 und DT4) mit der ersten Spannungswellenform (-VH) und der erste Anschluss einer zweiten Entladungslampe (DT4) des besagten zweiten Paares mit der zweiten Spannungswellenform (+VH) betrieben wird; wobei
die zweiten Anschlüsse der Entladungslampen des ersten Paares (DT1 und D2) über die erste Wicklung des ersten Shunt-Transformators (CDT1) miteinander verbunden sind, welche aus schiefer Wicklung oder aus Abschnittswicklung gebildet ist; und
die zweiten Anschlüsse der Entladungslampen des zweiten Paares (DT3 und DT4) über die erste Wicklung des zweiten Shunt-Transformators (CDT2) miteinander verbunden sind, welche aus schiefer Wicklung oder aus Abschnittswicklung gebildet ist; und
die zweite Wicklung des ersten Shunt-Transformators (CDT1) in Reihe mit der zweiten Wicklung des zweiten Shunt-Transformators (CDT2) geschaltet ist, wodurch ein Lampenstrom jeder der Entladungslampen (DT) abgestimmt und gemessen wird.

2. Eine parallele Beleuchtungsanlage für Entladungslampen für eine Oberflächenlichtquelle wobei; die parallele Beleuchtungsanlage eine Oberflächenlichtquellenanlage und erste und zweite Aufwärtstransformatoren (T1, T2) aufweist und
die Oberflächenlichtquellenanlage eine gerade Anzahl an Entladungslampen (DT) umfasst, wobei jede Entladungslampe einen ersten Anschluss und einen zweiten Anschluss aufweist;
**dadurch gekennzeichnet, dass** die parallele Beleuchtungslange des Weiteren umfasst:
einen ersten Shunt-Transformator (CDT1) mit einer ersten Wicklung und eine zweiten Wicklung; wobei
die Entladungslampen von dem ersten und dem zweiten Aufwärtstransformator (T1, T2) betrieben werden, die jeweils zwei Resonanzschaltkreise beinhalten, und wobei der erste Transformator (T1) eine erste Spannungswellenform (-VH) und der zweite Transformator (T2) eine zweite Spannungswellenform (+VH) erzeugt, und die erste Spannungswellenform eine andere zur zweiten Spannungswellenform um 180 Grad versetzte Phase aufweist; und
die Entladungslampen in einer Mehrzahl von Paaren (DT1 und DT2, DT3 und DT4) so angeordnet sind, dass der erste Anschluss einer ersten Entladungslampe (DT1) eines ersten Paares (DT1 und DT2) mit der ersten Spannungswellenform (-VH) betrieben wird und der erste Anschluss einer zweiten Entladungslampe (DT2) des besagten ersten Paares mit der zweiten Spannungswellenform (+VH) betrieben wird und der erste Anschluss einer ersten Entladungslampe (DT3) eines zweiten Paares (DT3 und DT3) mit der ersten Spannungswellenform (-VH) und der erste Anschluss einer zweiten Entladungslampe (DT4) des besagten zweiten Paares mit der zweiten Spannungswellenform (+VH) betrieben wird; wobei
die zweiten Anschlüsse jeder Entladungslampe des ersten Paares (DT1 und D2) über die erste Wicklung des Shunt-Transformator (CDT1) miteinander verbunden sind, welche aus schiefer Wicklung oder aus Abschnittswicklung gebildet ist; und
die zweiten Anschlüsse jeder der Entladungslampen des zweiten Paares (DT3 und DT4) über die zweite Wicklung des besagten Shunt-Transformator (CDT1) miteinander verbunden sind, weiche aus schiefer Wicklung oder aus Abschnittswicklung gebildet ist.

3. Eine parallele Beleuchtungsanlage nach Anspruch 2, wobei die parallele Entladungslampenbeleuchtungsanlage 2N Entladungslampen und der Shunt-Transformator (CDT1) N Windungen umfasst, wobei N eine ganze Zahl größer gleich drei ist.

## Revendications

1. Système d'éclairage parallèle pour des lampes à décharge pour une source lumineuse plane, le système d'éclairage parallèle ayant un système de source lumineuse plane et des premier et deuxième transformateurs élévateurs (T1, T2) ; le système de source lumineuse plane comprenant un nombre pair de lampes à décharge (DT), chaque lampe à décharge ayant une première borne et une deuxième borne ;
**caractérisé en ce que** le système d'éclairage parallèle comprend en outre :
un premier transformateur en dérivation CDT1 et un deuxième transformateur en dérivation CDT2, chaque transformateur ayant une première bobine et une deuxième bobine ;
les lampes à décharge sont commandées par les premier et deuxième transformateurs élévateurs (T1, T2) comprenant chacun deux circuits de résonance et où le premier transformateur (T1) génère une première forme d'onde de tension (-VH) et le deuxième transformateur (T2) génère une deuxième forme d'onde de tension (+VH), la première forme d'onde de tension étant déphasée de 180 degré par rapport à la deuxième forme d'onde de tension ;
les lampes à décharge sont agencées en une pluralité de paires (DT1 et DT2, DT3 et DT4) de manière que la première borne d'une première lampe à décharge (DT1) d'une première paire (DT1 et DT2) soit commandée avec la première forme d'onde de tension (-VH) et la première borne d'une deuxième lampe à décharge (DT2) de ladite première paire soit commandée avec la deuxième forme d'onde de tension (+VH), et la première borne d'une première lampe à décharge (DT3) d'une deuxième paire (DT3 et DT4) soit commandée avec la première forme d'onde de tension (-VH) et la première borne d'une deuxième lampe à décharge (DT4) de ladite deuxième paire soit commandée avec la deuxième forme d'onde de tension (+VH) ;
les deuxièmes bornes des lampes à décharge de ladite première paire (DT1 et DT2) sont connectées ensemble via la première bobine, qui est composée de bobinage oblique ou de bobinage à section, du premier transformateur en dérivation (CDT1) ;
les deuxièmes bornes des lampes à décharge de la deuxième paire (DT3 et DT4) sont connectées ensemble via la première bobine, qui est composée de bobinage oblique ou de bobinage à section, du deuxième transformateur en dérivation (CDT2) ; et
la deuxième bobine du premier transformateur en dérivation (CDT1) est connectée en série à la deuxième bobine du deuxième transformateur en dérivation (CDT2), en équilibrant et détectant ainsi un courant de lampe de chacune des lampes à décharge (DT).

2. Système d'éclairage parallèle pour des lampes à décharge pour une source lumineuse plane, le système d'éclairage parallèle ayant un système de source lumineuse plane et des premier et deuxième transformateurs élévateurs (T1, T2) ; le système de source lumineuse plane comprenant un nombre pair de lampes à décharge (DT), chaque lampe à décharge ayant une première borne et une deuxième borne ;
**caractérisé en ce que :**
le système d'éclairage parallèle comprend en outre : un premier transformateur en dérivation CDT1 ayant une première bobine et une deuxième bobine ;
les lampes à décharge sont commandées par les premier et deuxième transformateurs élévateurs (T1, T2) comprenant chacun deux circuits de résonance et où le premier transformateur (T1) génère une première forme d'onde de tension (-VH) et le deuxième transformateur (T2) génère une deuxième forme d'onde de tension (+VH), la première forme d'onde de tension étant déphasée de 180 degré par rapport à la deuxième forme d'onde de tension ;
les lampes à décharge sont agencées en une pluralité de paires (DT1 et DT2, DT3 et DT4) de manière que la première borne d'une première lampe à décharge (DT1) d'une première paire (DT1 et DT2) soit commandée avec la première forme d'onde de tension (-VH) et la première borne d'une deuxième lampe à décharge (DT2) de ladite première paire soit commandée avec la deuxième forme d'onde de tension (+VH), la première borne d'une première lampe à décharge (DT3) d'une deuxième paire (DT3 et DT4) soit commandée avec la première forme d'onde de tension (-VH) et la première borne d'une deuxième lampe à décharge (DT4) de ladite deuxième paire soit commandée avec la deuxième forme d'onde de tension (+VH) ;
les deuxièmes bornes de chaque lampe à décharge de la première paire (DT1 et DT2) sont connectées ensemble via la première bobine, qui est composée de bobinage oblique ou de bobinage à section, dudit transformateur en dérivation (CDT1) ;
et les deuxièmes bornes de chaque lampe à décharge de la première paire (DT3 et DT4) sont connectées ensemble via la deuxième bobine, qui est composée de bobinage oblique ou de bobinage à section, dudit transformateur en dérivation (CDT1).

3. Système d'éclairage parallèle selon la revendication 2, dans lequel ledit système d'éclairage parallèle à lampes à décharge comprend 2N lampes à décharge et le transformateur en dérivation (CDT1) comprend N bobines ou N est un entier égal ou supérieur à 3.
